(19) Europäisches Patentamt
European Patent Office
Office européen des brevets

(11) Publication number: **0 080 339 A2**

(12) # EUROPEAN PATENT APPLICATION

(21) Application number: 82306167.6

(22) Date of filing: 19.11.82

(51) Int. Cl.³: C 08 F 18/24, C 08 F 2/44

(30) Priority: 23.11.81 US 324215

(43) Date of publication of application: 01.06.83 Bulletin 83/22

(84) Designated Contracting States: DE FR GB IT NL

(71) Applicant: **PPG INDUSTRIES, INC., One Gateway Center, Pittsburgh Pennsylvania 15222 (US)**

(72) Inventor: **Eads, Carl Wayne, 459 Higland Avenue, Wadsworth Ohio 44281 (US)**
Inventor: **Crano, John Carl, 308 Castle Boulevard, Akron Ohio 44313 (US)**

(74) Representative: **Taylor, Phillip Kenneth et al, W.P. THOMPSON & CO. Coopers Building Church Street, Liverpool L1 3AB (GB)**

(54) **Colored monomer composition, method of polymerizing the composition, and polymerizate formed thereby.**

(57) Disclosed is a uniform, colored composition of monomeric polyol(allyl carbonate), a viscosity increasing polymer, and dispersed colorant. Also disclosed is a uniform, colored polymerizate of the composition and a method of preparing the uniform, colored polymerizate. In a preferred exemplification the polymerizate is neutral density gray, and the colorant is carbon black.

EP 0 080 339 A2

## DESCRIPTION

## COLORED MONOMER COMPOSITION, METHOD OF POLYMERIZING THE COMPOSITION, AND POLYMERIZATE FORMED THEREBY

Castings of polyol (allyl carbonate) are characterized by hardness and optical clarity. These castings are prepared by the free radical initiated addition polymerization of aliphatic polyol (allyl carbonate) monomers under conditions which destroy, degrade, or discolor most organic dyes useful as internal colorants of plastics. It has for this reason proven difficult to obtain satisfactory coloration of diol bis (allyl carbonate) castings. Moreover, the use of submicron colorants that are chemically inert to the polymerization initiators, e.g., silicas, titanium dioxide, carbon black, and the like, to internally color polyol(allyl carbonate) castings, e.g., to obtain a neutral density gray casting, synonymously referred to herein as a neutral gray casting, when carbon black is the colorant, have met only limited success. This is because the particulant colorants form agglomerates within the casting, reducing the optical clarity thereof while providing a minimum of coloration thereto.

It has now been found that a particularly satisfactory polyol (allyl carbonate) monomeric composition having coloration is provided by forming a composition of the aliphatic diol bis (allyl carbonate), a viscosity enhancing amount of a polymer present within the monomer, and submicron, inert, particulate colorant. It has further been found that a particularly desirable polymerizate having coloration may be prepared by forming a liquid composition of an aliphatic diol bis (allyl carbonate) and a viscosity increasing amount of a polymer, thereafter adding submicron, pigmentary, particulant material, e.g., carbon black, to the viscous composition whereby to form a viscous, liquid composition, and thereafter polymerizing the composition whereby to form a hard resin of desired coloration.

It has now been found that a polymerizate of a polyol (allyl carbonate) may be prepared by adding a viscosity increasing amount of a polymer to the polyol (ally carbonate) monomer, thereafter, adding a color imparting amount of a particulate, preferably submicron, chemically inert colorant, e.g. a light absorbing amount of carbon black, to the polyol(allyl carbonate) monomer of increased viscosity whereby to form a liquid composition of aliphatic diol bis (allyl carbonate) monomer, having sufficient polymeric material dispersed therein to provide a viscosity above about 100 centipoise (0.1 Pa s) at 22°C, and sufficient colorant, e.g., carbon black, to impart the desired color, e.g. render the liquid composition gray. The resulting liquid composition may be cured, i.e. the polyol (allyl carbonate) monomer may be polymerized, whereby to yield a colored polymerizate, e.g., neutral gray polymerizate of poly (polyol ally carbonate) having a second polymer and submicron colorant dispersed therethrough.

The second polymer enhances the viscosity of the polyol (allyl carbonate) monomer to an extent sufficient to substantially prevent agglomeration of the submicron particles, that is, an amount sufficient to enhance the dispersion of the submicron particles. The polymer may be chosen from the group consisting of homopolymers of mono-olefinically unsaturated monomers, copolymers of mono-olefinically unsaturated monomers, and copolymers of mono-olefinically unsaturated monomers and di-olefinically unsaturated monomers. As will be described more fully hereinbelow, a preferred polymer additive is a copolymer of a mono-olefinically unsaturated monomer having vinyl unsaturation, and a di-olefinically unsaturated monomer having vinyl and allyl unsaturation. Exemplary is a copolymer of an acrylate and an ester of an acrylic acid and an allyl alcohol. The polymer is generally present in a liquid composition at an amount sufficient to produce a viscosity above about 100 centipoise (0.1 Pa s) at 22°C.

The liquid composition has submicron particles of size preferably from about 0.005 to about 0.5 micrometres therein.

BAD ORIGINAL

The resulting colored viscous composition may be polymerized by introducing an initiator into the system or activating an initiator already present in the system whereby to provide a hard polymer.

As used herein, neutral gray, referred to synonymously as neutral density gray, means a material having substantially uniform transmittance of all wave lengths of visible light. Generally, the transmittance is from about 100% transmittance, i.e., for a substantially clear polymerizate, to less than 1% transmittance, i.e., for an almost opaque polymerizate, e.g., useful in the formation of welding goggles. Preferably the haze of the polymerizate is below about 25 percent for optical uses, although higher levels of haze may not be deleterious for uses other than optical uses.

As used herein, a colored polymerizate is one having a coloration thereto as evidenced by selective transmittance of various or all wavelengths of light. For example, a polymerizate having yellow coloration will absorb high amounts of blue light and transmit high amounts of red and green light, while a polymerizate having red coloration will absorb high amounts of blue and green light and transmit high amounts of red light. Generally, the transmittance is from 50 to 100 percent of the transmitted colors and a lesser portion of the absorbed colors. Total transmission, across all wave lengths of the visible spectrum, will be from about 100 percent transmittance, i.e., for a substantially clear polymerizate, to less than 1 percent transmittance, i.e., for an almost opaque polymerizate. Preferably the haze of the polymerizate is below about 25 percent for optical uses, although higher levels of haze may not be deleterious for uses other than optical use.

Polyol(allyl carbonates) which may be polymerized by the method herein described, whereby to exhibit enhanced physical properties and photochromic recovery include mono-functional allyl carbonates, diol bis(allyl carbonates), triol tris(allyl carbonates), tetra kis(allyl carbonates), and higher polyol(allyl carbonates).

Diol bis (allyl carbonate) monomers which may be polymerized by the method of this invention are normally linear, aliphatic liquid allyl carbonates, i.e., glycol bis (allyl carbonate)

compounds, in which the allyl groups may be substituted at the 2 position with a halogen, notably chlorine or bromine, or a 1 to 4 carbon alkyl group, generally a methyl or ethyl group, and the glycol group may be an alkylene, alkylene ether, alkylene polyether or alkylene carbonate group having from 2 to 10 carbons and oxygens. These diol bis (allyl carbonate) monomers are represented by the formula:

$$R_1 - O - \overset{\overset{\displaystyle O}{\|}}{C} - O - R_2 - O - \overset{\overset{\displaystyle O}{\|}}{C} - O - R_3$$

where $R_1$ and $R_3$ are allyl or substituted allyl groups, and $R_2$ is as defined below. $R_1$ and $R_3$ are independently represented by the formula:

$$H_2C = \overset{\overset{\displaystyle R^1}{|}}{C} - CH_2-$$

where $R^1$ may be hydrogen, halogen, or a 1 to 4 carbon alkyl group. Specific examples of $R_1$ and $R_3$ include allyl, 2-chloroallyl, 2-bromoallyl, 2-iodoallyl, 2-fluoroallyl, 2-methallyl, 2-ethylallyl, 2-isopropylallyl, 2-n-propylallyl, and 2-n-butylallyl groups. Most commonly, $R_1$ and $R_3$ are allyl groups, $H_2C = CH - CH_2-$. Such compounds and methods for making them are disclosed in U. S. Patents 2,370,567 and 2,403,113.

Specific examples of $R_2$ are alkylene groups such as ethylene, trimethylene, methylethylene, tetramethylene, ethylethylene, pentamethylene, hexamethylene, 2-methylhexamethylene, octamethylene, and decamethylene groups, alkylene ether groups such as $-CH_2-O-CH_2-$, $-CH_2CH_2-O-CH_2CH_2-$, $-CH_2-O-CH_2-CH_2-$, and $-CH_2CH_2CH_2-O-CH_2CH_2CH_2-$, alkylene polyether groups such as $-CH_2CH_2-O-CH_2CH_2-O-CH_2CH_2-O-CH_2CH_2O-CH_2CH_2-$, and $-CH_2-O-CH_2-$ groups, and alkylene carbonate and alkylene polycarbonate groups such as $CH_2CH_2$ $-O-CO-O-CH_2CH_2$ and $-CH_2CH_2-O-CH_2CH_2-O-CO-O-CH_2CH_2-OCH_2CH_2-$ groups. Most commonly, $R_2$ is $-CH_2CH_2-$, $CH_2CH_2-O-CH_2CH_2-$, or $-CH_2CH_2-O-CH_2CH_2-O-CH_2CH_2$.

Specific examples of diol bis (allyl carbonate) monomers useful in carrying out the method herein contemplated include ethylene glycol bis (2-chloroallyl carbonate), diethylene glycol bis (2-methallyl carbonate), triethylene glycol bis (allyl carbonate), propylene glycol bis (2-ethylallyl carbonate), 1,3-propanediol bis (allyl carbonate), 1,3-butanediol bis (allyl carbonate), 1,4-butanediol bis (2-bromoallyl carbonate), dipropylene glycol bis (allyl carbonate), trimethylene glycol bis (2-ethylallyl carbonate), and pentamethylene glycol bis (allyl carbonate).

Commercially important diol bis (allyl carbonate) monomers which may be polymerized by the method herein contemplated are:

$$CH_2 = CH-CH_2-O-\overset{\overset{O}{\|}}{C}-O-CH_2-CH_2-O-CH_2CH_2-O-CH_2CH_2-O-\overset{\overset{O}{\|}}{C}-O-CH_2CH = CH_2,$$

$$CH_2 = CH-CH_2-O-\overset{\overset{O}{\|}}{C}-O-CH_2CH_2-O-CH_2CH_2-O-\overset{\overset{O}{\|}}{C}-OCH_2-CH - CH_2,$$

and $$CH_2 = CH-CH_2-O-\overset{\overset{O}{\|}}{C}-O-CH_2-O-\overset{\overset{O}{\|}}{C}-O-CH_2-CH = CH_2.$$

Triol tris(allyl carbonates) which may be polymerized by the method of this invention, either homopolymerized or copolymerized, e.g., with diol bis(allyl carbonates) are represented by the formula

$$R_4\ (O\overset{\overset{O}{\|}}{C}O-CH_2CH=CH_2)_n$$

where $R_4$ is an organic moiety chosen from the group consisting of moieties derived from polyols and extended polyols, most frequently a triol or extended triol where the hydroxyl groups of the precursor polyol $R_4(OH)_n$ are non-vicnal.

While the functionality is shown as tris functionality, it is to be understood that in higher polyols n is greater than 2, e.g., above about 2.2, representing a mixture of diols and higher polyols, to about 8 representing a derivative of trimeric pentaerythritol. By "non-vicinal" it is meant that the hydroxyl groups are not on adjacent carbons. Specific triol precursors

useful in preparing the tris(allyl carbonate) materials useful in this invention are triols with primary or secondary hydroxyl groups. Triols having primary hydroxyl groups are preferred precursors. One such class of triols are 1,1,1-trimethylol alkanes. Also useful are extended trimethylol alkale tris(allyl carbonate) monomers such as lactone extended trimethylol alkanes and alkyl oxide extended trimethylol alkanes. By an extended triol is meant the reaction product having terminal hydroxyl groups of the triol and a suitable reactant, e.g., an alkyl oxide or a lactone. Typical lactone extended trimethylol alkanes include -caprolactone extended trimethylol methane, -caprolactone extended trimethylol ethane, -caprolactone extended trimethylol propane, and -caprolactone extended trimethylol butane. Typical alkyl oxide extended triols include ethylene oxide extended trimethylol methane, ethylene oxide extended trimethylol ethane, ethylene oxide extended trimethylol propane, ethylene oxide extended trimethylol butane, propylene oxide extended trimethylol methane, propylene oxide extended trimethylol methane, propylene oxide extended trimethylol ethane, propylene oxide extended trimethylol butane.

The preferred polyols meeting these requirements have the general formula $R_4(OH)_n$ where n is greater than 2 up to about 8 and generally is about 3.$R_4$ can be

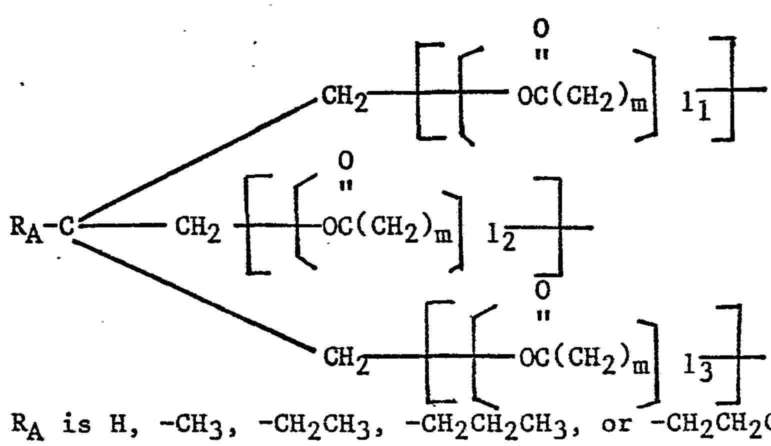

where $R_A$ is H, $-CH_3$, $-CH_2CH_3$, $-CH_2CH_2CH_3$, or $-CH_2CH_2CH_2CH_3$, and $l_1$, $l_2$ and $l_3$ are each integers from 0 to 5 and the sum of $l_1 + l_2 + l_3$ is 2 or more and generally from 2 to 8, although values as high as 15 are possible. The value of m depends on the lactone utilized to extend the polyol and is generally 4 or 5.

The chain extending lactone may be a delta lactone having the formula

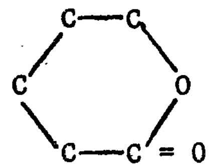

which can be substituted with hydrogen, methyl groups, or ethyl groups.

According to a still further exemplification, the chain extending lactone group can be an epsilon lactone having the formula:

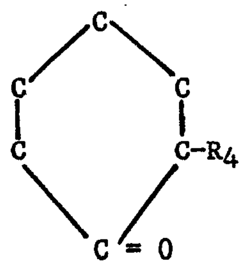

where $R_4$ is hydrogen, a methyl group, or an ethyl group and where $R_2$ can be on any of the carbons other than the carbonyl carbon. One exemplary triol is Union Carbide Corporation NIAX® PCP-0301 brand epsilon-caprolactone extended trimethylol propane.

According to a still further exemplification, $R_4$ can be

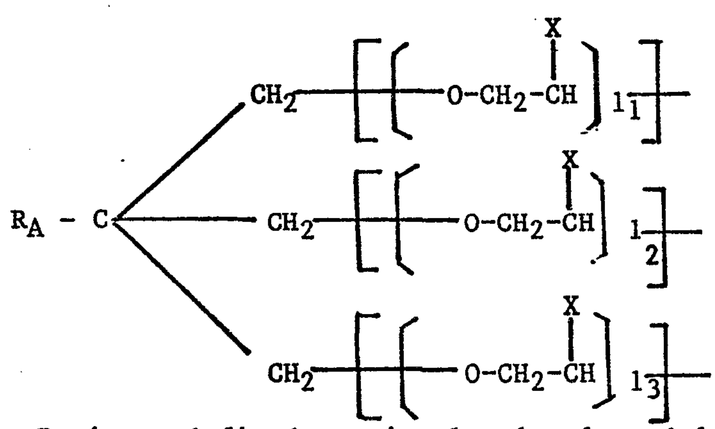

where $R_A$ is as defined previously, $l_1$, $l_2$ and $l_3$ are integers from 0 to 5 and the sum of $l_1 + l_2 + l_3$ is 2 or more and generally from about 2 to 8, although values as high as about 15 are possible, and X is H or $CH_3$. The chain extenders may be ethylene oxide groups as exemplified by Upjon ISONOL® 93 ethylene oxide extended trimethylol

propane. Alternatively, the extenders may be propylene oxide groups as in BASF-Wyandotte PLURACOL TP brand propoxylated trimethylol propane.

According to a still further exemplification, $R_4(OH)_3$ may be an extended glycerol, for example, ethylene oxide extended glycerol having the general formula:

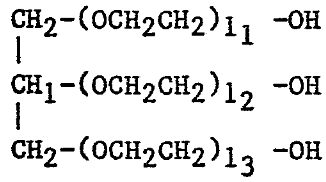

or propylene oxide extended glycerol having the formula:

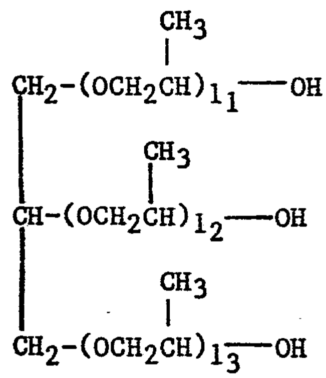

or a lactone extended glycerol having the formula:

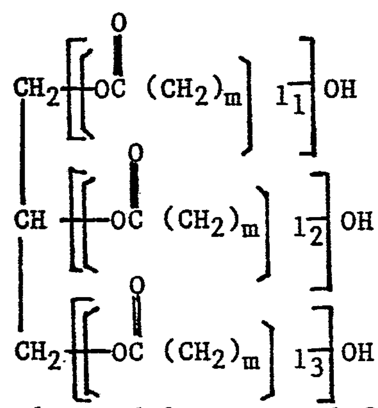

where m and $l_1$, $l_2$, and $l_3$ are as defined above. Typical propoxylated glycerines include DOW VORANOL 2025 brand propoxylated glycerine having a molecular weight of about 260 grams per gram mole, DOW VORANOL 2070 brand propoxylated glycerine having a molecular weight of about 700 grams per gram mole, and BASF-Wyandotte PLURACOL GP730 brand propoxylated glycerine having a molecular weight of about 730 grams per gram mole.

As herein contemplated, the colored composition is prepared from a composition of polyol(allyl carbonate) monomer, a viscosity increasing amount of a viscosity increasing polymer, and the submicron colorant. For example, the neutral density gray composition is prepared from a composition of polyol (allyl carbonate) monomer, most commonly diol bis (allyl carbonate) a viscosity increasing polymer, and carbon black. The polymer is either soluble in the polyol (allyl carbonate), swollen by the polyol (allyl carbonate), or swollen by and partially soluble in the polyol (allyl carbonate).

By a viscosity increasing polymer is meant a polymer which, at the concentrations of polymer and polymer molecular weight herein contemplated, provides a composition of polyol (allyl carbonate) and polymer having a viscosity high enough to avoid the tendency of finely subdivided carbon black to agglomerate or clump together when introduced into neat polyol (allyl carbonate).

For certain applications, e.g., opthalmic lenses, photographic lenses, and the like, the polymer should be optically compatible with the polyol (allyl carbonate). That is, it should not form haze in the polyol (allyl carbonate) polymerizate.

Moreover, the polymer should be resistant to destruction by the peroxy initiators used to polymerize the polyol (allyl carbonate), and not interfere therewith.

As herein contemplated, the polymer may be a monofunctional homopolymer or a copolymer of monofunctional monomers, or a copolymer of a monofunctional monomer and a difunctional monomer. Preferably the difunctional monomer has functional groups of high and low reactivity, e.g., a vinyl group and an allyl group, and the monofunctional monomer is a vinyl monomer.

Preferably the copolymer is a copolymer of (a) an acrylate, i.e., an acrylate ester or an acrylic acid, and (b) an ester of an acrylic acid and an allyl alcohol or substituted allyl alcohol having the formula:

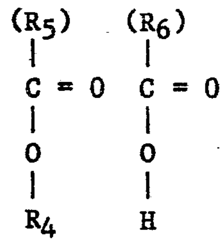 or 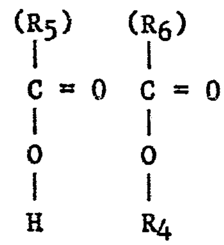

where $R_5$-C-OH and $R_6$-COH independently are acrylic acids, as acrylic acid, methacrylic acid, ethyl acrylic acid, butyl acrylic acid, propyl acrylic acid, and higher acrylic acids; and $R_4OH$ is an allyl alcohol or substituted allyl alcohol, having the formula:

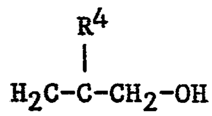

where $R^4$ is chosen from the group consisting of hydrogen, halogen, and $C_1$ to $C_4$ alkyls. Most frequently $R^4OH$ is allyl alcohol,

$H_2C$=CH-$CH_2OH$,

$R_5COH$ and $R_6COH$ are independently either acrylic acid,

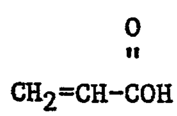

or methacrylic acid

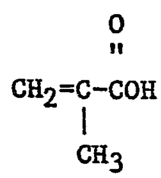

For example, the difunctional monomer may be allyl acrylate, allyl methacrylate, or the like, and the monofunctional monomer may be methyl acrylate, methyl methacrylate, ethyl acrylate, ethyl methacrylate, or the like. In this way there is provided a linear, minimally cross linked, soluble, swellable polymer, with polymerization predominantly through the vinyl groups.

One particularly desirable copolymer is a copolymer of methyl methacrylate and allyl methacrylate. In a preferred exemplification the copolymer contains from about 80 to about 99 weight percent methyl methacrylate and balance allyl methacrylate.

Especially preferred is a copolymer containing up to 97 weight percent methyl methacrylate, balance allyl methacrylate, and an apparent molecular weight of 100,000 to above about 600,000 determined by inherent viscosity versus poly(methyl methacrylate).

Especially preferred copolymers with olefinic unsaturation, i.e., copolymers of an acrylate and an allyl acrylate, are those having a macromolecule molecular weight above about 100,000, and especially from about 100,000 to about 600,000. These copolymers are characterized by a low rate of solubilization in and swelling by the polyol (allyl carbonate) monomer. As a consequence, in order to obtain high levels thereof in the final polymerizate, e.g., above about 8 to 15 weight percent, they are usually first solubulized in or swollen by a suitable solvent, e.g., methylene chloride, and thereafter admixed with polyol (allyl carbonate) and the solvent subsequently recovered therefrom.

Alternatively, the polymer may be a polymer of a monomer having mono-olefinic unsaturation, e.g., poly(styrene), poly(acrylonitrile), poly(vinyl chloride), poly(vinylidene chloride), poly(vinyl fluoride), poly (vinylidene fluoride), poly(vinyl acetate), poly(acrylic acid), poly(methacrylic acid), poly(methyl acrylate), poly(ethyl acrylate), poly(butyl acrylate), poly(methyl methacrylate), poly(ethyl methacrylate), poly(butyl methacrylate), poly(acrylamide), poly(ethylene), poly(propylene), and copolymers thereof. Alternatively, the polymer may be a heterochain polymer, i.e., a condensation polymer. Suitable heterochain polymers include saturated polyesters such as terephthlates, e.g., polyethylene terephthlate, and polycarbonates; polyethers, such as polyacetal, poly(ethylene oxide), poly(propylene oxide), poly(epichlorohydrin), poly(epichlorohydrin-ethylene oxide), poly(tetrahydrofuran); or polyamides and polyimides.

Where the end use of the polymerizate requires optical clarity, polymers that do not materially interfere therewith, i.e., polymers that do not form haze, are preferred. These polymers include poly(styrene), poly(acrylic acid), poly(methacrylic acid), poly(methyl acrylate), poly(ethyl acrylate), poly(butyl acrylate),

poly(vinyl acetate), poly(allyl methacrylate-methyl methacrylate), poly(allyl acrylate-methyl acrylate), and poly(allyl acrylate-ethyl acrylate).

The polymer may be added directly to the polyol (allyl carbonate) monomer. Alternatively, the polymer may be added to an organic solvent, e g., methylene chloride, whereby to form a solution. When the polymer is added to an organic solvent, the polyol (allyl carbonate) monomer is added to the solution, and the solvent driven off, e.g., by distillation, evaporation, boiling, or the like.

According to another exemplification the polymer is first added to a solvent, and the polyol (allyl carbonate) is added to the resulting solvent. The especially preferred solvents are those solvents having a solubility parameter of about 9.0 to about 10.0 $(calories/cubic centimeter)^{-0.5}$, where the solubility parameter is the square root of the cohesive energy density, as described in F. Rodriquez, Principles of Polymer Systems, McGraw-Hill Book Co., New York, N.Y. (1970), and Beerbower, Kaye, and Pattison, Chem. Engr., December 18, 1967, page 118.

Exemplary solvents include halogenated hydrocarbons, such as methylene chloride, chloroform, dichloroethylene, ethylene dichloride, tetrachloroethane, tetrachloroethylene, trichloroethane, trichloroethylene, aromatics, such as benzene, nitrobenzene, ortho-dichlorobenzene, styrene, and chlorobenzene, and hydrocarbons. Alternatively, other solvents such as benzaldehyde, carbon disulfide, chlorobromomethane, cyclohexanone, ethyl chloroformate, diethylene glycol, diphenyl, turpentine, cyclohexane, isooctane, and the like may be used.

The amount of solvent is from about one to about twenty-five times the weight of polymer, and preferably from about four to about twenty times the weight of the polymer.

The composition further includes colorant to impart coloration to the polymerizate. For example carbon black imparts the neutral density gray coloration. As used herein, carbon black means a substantially pure, elemental carbon, containing less than

one weight percent ash, not more than small amounts of chemically absorbed oxygen and of bonded hydrogen, and having a graphitic structure of randomly oriented, two dimensional platelettes, the particles being in the form of spherical particles 5 to 500 nm Angstroms in diameter. These materials are commercially referred to as channel black, impingement black, gas black, furnace combustion black, furnace thermal black, and lamp black.

The carbon black herein contemplated is in the mass average size range of 5 to 500 nm, especially 5 to 300 nm, with sizes of 5 to 50 nm being especially preferred.

The amount of carbon black in the liquid composition and in the polymerizate is sufficient to provide a uniform, neutral density gray to opague black coloration. This is generally from a barely optically detectable level, i.e., above about 1 to 5 parts per million carbon black, basis polyol (allyl carbonate), to an amount sufficient to produce an opague polymerizate, i.e., above about 100 to 200 parts per million, basis weight of polyol (allyl carbonate).

Alternatively, the composition may include a colorant having selective absorption and transmission characteristics, that is, a color imparting colorant. The colorants herein contemplated are submicron particles that are chemically inert to the organic peroxide initiators. That is, the colorants are not bleached or decomposed by the organic peroxide initiators.

The colorant particles may be spherical, fibrous, filamentary, crystalline, plate-like, amorphous, or the like. Preferably the particles have a mass average size of 5 to 1000 nm especially 5 to 750 nm.

Exemplary particulate colorants, i.e., pigments, include zinc oxide, especially colloidal zinc oxide; zinc sulfide; anatase form titanium dioxide; rutile form titanium dioxide; fine China clays, especially particulate kaolins having submicron mass average particle size and pyrophillite; barium sulfate, especially air

floated barium sulfate; iron oxide, including, among others, Spanish oxide, Persian Gulf oxide, Burnt Sienna, Ocher, calcined synthetic iron oxide, synthetic hydrated iron oxide, and precipitated black iron oxide; burnt umber; chrome pigments; hydrated chrome oxides; fine and extra fine aluminum oxides; silicas; and mixtures thereof. The above enumeration is exemplary, it being understood that any particulate, pigmentary, fine material, capable of withstanding organic peroxide initiated free radical polymerizations, and capable of being dispersed in the polyol(allyl carbonate)-viscosity enhancing polymer composition, may be used in the method of this invention to the colored polymerizates of this invention.

The amount of pigment in the liquid composition and in the polymerizate is sufficient to provide a uniform coloration. This may be found by experimentation. The amount of colorant is a function of the colorant, but is generally from about 1 part per million to about 1000 parts per million, basis weight of polyol-(allyl carbonate).

According to a further exemplification of this invention, a combination of carbon black and pigmentary colorant may be utilized, whereby to provide low transmission. According to a still further exemplification of this invention, an internal or external dye may be present in the composition with either the carbon black or the pigmentary colorant or with both carbon black and pigmentary colorant.

The polymerization of the polyol (allyl carbonate) composition is initiated by the creation of active centers, e.g., free radicals, carbanions, and carbonium ions. Useful free radical initiators are peroxy initiators. The peroxy initiators include: isobutyryl peroxide; di(2-ethylhexyl) peroxydicarbonate; acetyl cyclohexane sulfonyl peroxide; di(sec-butyl) peroxydicarbonate; diisopropyl peroxydicarbonate; 2,4-dichlorobenzoyl peroxide, t-butyl peroxypivalate; decanoyl peroxide; lauroyl peroxide, propionyl peroxide; 2,5-dimethyl-2,5-bis(2-ethyl hexylperoxy) hexane; acetyl peroxide; succinic acide peroxide; t-butyl peroxyoctoate;

benzoyl peroxide; p-chlorobenzoyl peroxide; t-butyl peroxyisobutyrate; t-butyl peroxymaleic acid; bis(1-hydroxycyclohexyl) peroxide, 1-hydroxy-1'-hydroperoxy dicyclohexyl peroxide; t-butyl peroxyisopropyl carbonate; 2,5-dimethyl-2,5-bis(benzoylperoxy) hexane; t-butyl peroxyacetate; methyl ethyl ketone peroxides; di-t-butyl diperoxyphthalate and t-butyl peroxybenzoate.

Especially preferred peroxy initiators are those that do not discolor, char, or burn the resulting polymerizate. Exemplary are diisopropyl peroxydicarbonate and benzoyl peroxide.

The polymerizates herein contemplated are nonelastomeric, rigid, hard resins formed by the polymerization of polar monomers in the presence of a polymer of polar monomers. The colored polymerizates herein contemplated are further characterized by a 0-15 second Barcol hardness above about 25-20.

The solid, neutral gray polymerizates of this invention, produced as described hereinabove, may be utilized to provide neutral density gray opthalmic lenses, neutral density gray photographic lenses and filters, neutral density gray lens elements for optical instruments as microscopes, telescopes, and neutral density gray, in fact, frequently opaque lenses for welding goggles, light shields and the like. Additionally, the neutral density gray castings produced as described herein may be utilized for aircraft transparencies, cathode ray tube screens, and the like.

The colored polymerizates herein contemplated find use as light absorbing filters, opthalmic colored lenses, and decorative articles.

According to one exemplification herein contemplated, a liquid composition is prepared containing from about 90 to about 97 weight percent diethylene glycol bis (allyl carbonate), balance a copolymer containing from about 90 to about 98 weight percent methyl methacrylate balance allyl methacrylate, and having a viscosity average molecular weight of from about 100,000 to about 800,000. The polymer is dispersed in the diethylene glycol bis (allyl carbonate) monomer by mechanical mixing whereby to yield a substantially clear, liquid composition having a viscosity above

about 100 poise (10 Pa s). To this composition is added from about one-tenth of one percent to about three-tenths of one percent of 5 nm to 30 nm mass average particle size carbon black which is dispersed therein by further mechanical mixing, e.g., kneading, extruding, or the like whereby to provide a uniform, neutral density gray viscous composition. Thereafter, initiator, for example, isopropylperoxydicarbonate may be added thereto at about 1.5 to about 3.5 weight percent basis weight of diethylene glycol bis (allyl carbonate) and dispersed therein. Thereafter the material may be heated over a period of about 10 to 24 hours whereby to yeild a neutral density gray hard resin. The curing may be effectuated in opthalmic molds, between molds, cathode ray tube covers, or other means so as to form a flat sheet or plate, or a shaped or curved sheet or plate.

According to an alternative exemplification, a concentrated, opaque, viscous composition, rich in polymer and colorant may be prepared, for subsequent addition to polyol(allyl carbonate) monomer. For example, a concentrate may be prepared containing 50 to 75 weight percent diol bis(allyl carbonate) and balance, basis total organics, of a copolymer of 90 to 98 percent methyl methacrylate, balance allyl methacrylate, having a viscosity average molecular weight of 100,000 to 800,000, and about 1000 to 10,000 parts per million of colorant, e.g., titanium dioxide. One part of concentrate may be added to 5 to 20 parts of neat polyol(allyl carbonate), e.g., diethylene glycol bis(allyl carbonate). Thereafter 1.5 to 3.5 weight percent diisopropylperoxy dicarbonate, basis weight of monomer, is added to the composition. Thereafter the material is heated to yield a colored polymerizate.

The following examples are illustrative of this invention.

## EXAMPLE I

A composition of diethylene glycol bis (allyl carbonate), poly (methyl methacrylate), and carbon black was prepared and polymerized to yield a black polymerizate.

One hundred eighty grams of PPG Industries CR-39® diethylene glycol bis (allyl carbonate) was poured into a 400 milliliter stainless steel beaker. To this was added 0.09 grams of Cabot Monarch 700 (TM) carbon black and 20 grams of poly(methyl methacrylate) having a viscosity average molecular weight above about 500,000. This composition was stirred in a Disperator® for two hours at about 22 degrees Centigrade and for 2 hours at 60 degrees Centigrade. Thereafter, the composition was cooled to room temperature, 5.4 grams of benzoyl peroxide was added to the composition, and stirring continued for 30 minutes. Thereafter the composition sat undisturbed at 22 degrees Centigrade for about 64 hours. The resulting composition was a highly viscous pourable moldable black liquid.

A portion of the composition was placed in a glass mold formed by a one-eight inch (0.32 cm) thick gasket between a pair of 8 inch (20.32 cm) by 8 inch (20.32 cm) glass plates. The composition was cured according to the following cure cycle:

TABLE I

(Time-Temperature Sequence)

| Cumulative Hours | Temperature, °C |
|---|---|
| 2 | 63 |
| 4 | 65 |
| 6 | 67 |
| 8 | 77 |
| 10 | 80 |
| 12 | 85 |
| 14 | 88 |
| 16 | 92 |
| 18 | 100 |

The cured solid was opaque.

EXAMPLE II

A portion of the viscous liquid composition prepared in Example I was further diluted with PPG Industries, Inc. CR-39® diethylene glycol bis (allyl carbonate), and cured to yield a dark gray polyerizate.

To 111 grams of the material prepared in Example I was added 111 grams of PPG Industries, Inc. CR-39® diethylene glycol bis (allyl carbonate). The resulting composition was stirred at 22 degrees Centigrade for five hours on a Disperator, 3.3 grams of benzoyl peroxide was added to the composition, and stirring was continued for one hour at 22 degrees Centigrade.

The composition was poured into a glass mold formed by a one-eight inch (0.32 cm) thick gasket between a pair of 8 inch (20.32 cm) by 8 inch (20.32cm) glass plates and cured as described in Example I. The cured solid was dark gray.

EXAMPLE III

Two composiitons were prepared and polymerized. One contained diethylene glycol bis (allyl carbonate), poly(methyl methacrylate-allyl methacrylate), and carbon black. The other contained only diethylene glycol bis (allyl caronate) and carbon black. Both compositions were polymerized. The polymerizate containing poly(methyl methacrylate-allyl methacrylate) was darker gray than the polymerizate that did not contain a second polymer therein.

One composition was prepared by adding 10 grams of a copolymer of 97 percent methyl methacrylate and 3 percent allyl methacrylate, and having a viscosity average molecular weight of 500,000 to 190 grams of PPG CR-39® diethylene glycol bis (allyl carbonate). This composition was stirred with a Dispersator at 77 degrees Centigrade for about 3 to 4 hours. Thereafter, 0.019 grams of Cabot Monarch 700 submicron carbon black was added to the composition and stirred for three hours. After dispersion of the carbon black, a solution of 6.6 grams of isopropyl peroxy dicarbonate in 76.6 grams of diethylene glycol bis (allyl carbonate) was added to

the composition, and stirred for 30 minutes at 22 degrees Centigrade, and then cooled to about 5 degrees Centigrade. Thereafter two samples of the composition were poured into molds formed of two 8 inch (20.32 cm) by 8 inch (20.32 cm) glass plates separated by an 1/8 inch (0.32 cm) gasket and cured according to the following cycle:

TABLE II

| Cumulative Time (hours) | Temperature, °C |
|---|---|
| 0 | 42 |
| 4 | 44 |
| 6 | 45 |
| 8 | 47 |
| 10 | 48 |
| 12 | 50 |
| 14 | 52 |
| 16 | 54.5 |
| 18 | 57 |
| 20 | 61 |
| 22 | 69 |
| 23 | 79 |
| 23.6 | 84 |
| 24 | 98 |
| 24.1 | 100 |

The resulting polymerizates were uniformly colored, and had 2.7 to 3.5 percent light transmission and 14.8 to 17.6 percent haze.

A second composition was prepared containing 190 grams of PPG CR-39® diethylene glycol bis (allyl carbonate) and 0.019 gram of Cabot Monarch 700 submicron carbon black. This was stirred for five hours on a Dispersator. After dispersion of the carbon black a solution of 6.6 grams of isopropyl peroxy dicarbonate in 26.6 grams of diethylene glycol bis (allyl carbonate) was added to the composition and stirred for 30 minutes at 22 degrees Centigrade, and cured according the schedule described hereinabove. The resulting casting had 64.3 percent transmission and 14.2 percent haze.

EXAMPLE IV

A neutral density gray casting of diethylene glycol bis (allyl carbonate) and poly (methyl methacrylate-allyl methacrylate) was prepared in the form of a cathode ray tube screen.

A composition was prepared by adding 10 grams of a copolymer of allyl methacrylate and methyl methacrylate to 190 grams of PPG Industries, Inc. CR-39® diethylene glycol bis (allyl carbonate). The copolymer contained 97 percent methyl methacrylate, 3 percent allyl methacrylate, and had a viscosity average molecular weight of about 500,000.

The composition was stirred on a Disperator at about 55 degrees Centigrade for about 5 hours. After stirring, the composition was allowed to sit at about 22 degrees Centigrade for about 16 hours. Thereafter, 0.0040 grams of Cabot Monarch 700 submicron carbon black was added to the composition, and the composition was stirred for two hours. After dispersing the carbon black in the composition, 6.6 grams of neat isopropyl peroxy dicarbonate was added to the composition, and the gray, viscous composition was poured into a mold formed by two glass cathode ray tube covers with a 1/8 inch (0.32 cm) gasket therebetween and cured according to the following cure cycle:

TABLE III

| Cumulative Time (hours) | Temperature, °C |
|---|---|
| 0 | 42 |
| 4 | 44 |
| 6 | 45 |
| 8 | 47 |
| 10 | 48 |
| 12 | 50 |
| 14 | 52 |
| 16 | 54.5 |
| 18 | 57 |
| 20 | 61 |
| 22 | 69 |
| 23 | 79 |
| 23.6 | 84 |
| 24 | 98 |
| 24.1 | 100 |

The mold was removed from the oven, and the resulting casting, in the form of a cathode ray tube, had a frosted surface, 9.9 percent haze, and 33 percent light transmission.

EXAMPLE V

A portion of the uncured composition prepared in Example IV, and containing 5 weight percent of the 500,000 viscosity average molecular copolymer of 97 percent methyl methacrylate-3 percent allyl methacrylate, 20 parts per million of submicron carbon black, and 3.5 weight percent isopropyl peroxy dicarbonate, was partially cured in a flat plate mold, and thereafter fully cured in a curved mold.

The composition was placed in a mold formed of two flat, 8 inch (20.32 cm) by 8 inch (20.32 cm) plates with a 1/8 inch (0.32 cm) gasket therebetween, and cured according to the following cure cycle:

TABLE IV

| Cumulative Time (hours) | Temperature, °C |
|---|---|
| 5 | 44 |
| 6 | 45 |
| 8 | 47 |
| 10 | 48 |
| 11 | 50 |

The resulting casting was leathery, bendable, and formable. It was placed in a mold formed of two cathode ray tubes covered with a 1/8 inch (0.32 cm) gasket therebetween, and cured according to the following cycle:

TABLE V

| Cumulative Time (hours) | Temperature, °C |
|---|---|
| 2 | 52 |
| 4 | 54.5 |
| 6 | 57 |
| 8 | 61 |
| 10 | 69 |
| 12 | 98 |

The resulting casting had a smooth surface, a 0-15 second Barcol hardness of 31-25, 8.1 percent haze, and 35.9 percent transmission.

While the invention has been described with respect to certain exemplifications and embodiments, such description is only illustrative, the scope of the invention being described by the claims appended hereto.

## CLAIMS

1. A coloured polymerizate comprising aliphatic poly-(polyol (allyl carbonate)), having a second polymer and particulate colourant dispersed therethrough.

2. The coloured polymerizate of claim 1, wherein the second polymer enhances the dispersion of the particulate colourant into monomeric polyol(allyl carbonate).

3. A coloured polymerizate as claimed in claim 1 or 2, wherein the second polymer is chosen from homopolymers of monoolefinically unsaturated monomers, copolymers of mono-olefinically unsaturated monomers, and copolymers of mono-olefinically unsaturated and diolefinically unsaturated monomers.

4. A coloured polymerizate as claimed in claim 3, wherein the second polymer is a copolymer of (a) a mono-olefinically unsaturated monomer having vinyl unsaturation, and (b) a diolefinically unsaturated monomer having vinyl and allyl unsaturation.

5. A coloured polymerizate as claimed in claim 4, wherein the second polymer is a copolymer of (a) an acrylate, and (b) an ester of an acrylic acid and an allyl alcohol.

6. A coloured polymerizate as claimed in any of claims 3 to 5, wherein the second polymer has a viscosity average molecular weight above about 100,000.

7. A coloured polymerizate as claimed in any of the preceding claims wherein the colourant has a mass average particle size below about 1000 nm.

8. A coloured polymerizate as claimed in any of the preceding claims wherein the concentration of colourant is from about 1 part per million to about 250 parts per million, basis weight of polyol(allyl carbonate).

9. A coloured polymerizate as claimed in any one of the preceding claims, wherein the colouration is neutral gray, the colourant is carbon black, and the carbon black has a mass average particle size below about 1000 nm.

10. A coloured polymerizate as claimed in claim 9, wherein the concentration of carbon black is from about 1 part per million to about 250 parts per million, basis weight of polyol(allyl carbonate).

11. A method of preparing a coloured polymerizate of a polyol(allyl carbonate) comprising:

(a) adding a viscosity increasing amount of a polymer to the polyol(allyl carbonate) monomer;

(b) adding an amount of particulate colourant to the polyol(allyl carbonate) monomer of increased viscosity which is effective to produce the desired colouration; and

(c) curing the monomer to yield a coloured polyol(allyl carbonate) polymer.

12. A method as claimed in claim 11, wherein the polymer is chosen from homopolymers of mono-olefinically unsaturated monomers, copolymers of mono-olefinically unsaturated monomers, and copolymers of mono-olefinically unsaturated monomers and diolefinically unsaturated monomers.

13. A method as claimed in claim 12, wherein the polymer is a copolymer of (a) a mono-olefinically unsaturated monomer having vinyl unsaturation, and (b) a diolefinically unsaturated monomer having vinyl and allyl unsaturation.

14. A method as claimed in claim 13, wherein the polymer is a copolymer of (a) an acrylate, and (b) an ester of an acrylic acid and an allyl alcohol.

15. A method as claimed in any of claims 11 to 14, wherein the polymer has a viscosity average molecular weight above about 100,000.

16. A method as claimed in any of claims 11 to 15, wherein the composition of polyol(allyl carbonate) monomer, viscosity increasing polymer, and particulate colourant has a viscosity above about 100 centipoise (0.1 Pa s) at 22 degrees Centigrade.

17. A method as claimed in any of the preceding claims, wherein the particulate colourant has a mass average particle size below about 1000 nm.

18. A method as claimed in any of the preceding claims, wherein the liquid composition of polyol(allyl carbonate) monomer, polymer, and particulate colourant contains from about 1 part per million to about 250 parts per million of colourant.

19. A method as claimed in any of the preceding claims, wherein the polymerizate is neutral density gray, the colourant is carbon black, and the carbon black has a mass average particle size below about 1000 nm.

20. A liquid composition comprising polyol(allyl carbonate) monomer, sufficient polymeric material to provide a viscosity above about 100 centipoise (0.1 Pa s) at 22 degrees Centigrade, and a particulate colourant.

21. A liquid composition as claimed in claim 20, wherein the polymer is chosen from homopolymers of monoolefinically unsaturated monomers, copolymers of mono-olefinically unsaturated monomers, and copolymers of mono-olefinically unsaturated monomers and diolefinically unsaturated monomers.

22. A liquid composition as claimed in claim 21, wherein the polymer is a copolymer of (a) a mono-olefinically unsaturated monomer having vinyl unsaturation, and (b) diolefinically unsaturated monomer having vinyl and allyl unsaturation.

23. A liquid composition as claimed in claim 22, wherein the polymer is a copolymer of (a) an acrylate, and (b) an ester of an acrylic acid and an allyl alcohol.

24. A coloured polymerizate as claimed in claim 1, substantially as hereinbefore described in any one of the Examples.

25. A composition as claimed in claim 19, substantially as hereinbefore described in any one of the Examples.

26. A method as claimed in claim 10 substantially as hereinbefore described in any one of the Examples.